# FASCICULE DE BREVET EUROPEEN

(11) **EP 2 146 879 B1**
(45) Date de publication et mention de la délivrance du brevet: **18.05.2011**
(21) Numéro de dépôt: 08788047.2
(22) Date de dépôt: 26.03.2008
(51) Int. Cl.: B60T 7/10, B60T 8/00, B60T 11/10, B60T 17/18, B64C 25/44, B64C 25/48

(54) **DISPOSITIF DE FREINAGE DE SECURITE MONTE ENTRE UN RESERVOIR DE FLUIDE HYDRAULIQUE ET DES ORGANES ACTIONNEURS APTES A AGIR SUR DES ELEMENTS DE FREINAGE**
ZWISCHEN EINEM HYDRAULIKFLÜSSIGKEITSTANK UND AKTIVIERUNGSELEMENTEN ZUR BEEINFLUSSUNG VON BREMSELEMENTEN MONTIERTE SICHERHEITSBREMSVORRICHTUNG
SECURITY BRAKING DEVICE MOUNTED BETWEEN A HYDRAULIC FLUID TANK AND ACTUATION MEMBERS CAPABLE OF ACTING ON BRAKING MEMBERS

(30) Priorité: 18.04.2007 FR 0754537
(43) Date de publication de la demande: 27.01.2010
(73) Titulaire: BERINGER SAS, 69220 Saint Jean d'Ardières (FR)
(72) Inventeur: BERINGER, Rémi, F-42940 Chatelneuf (FR)
(74) Mandataire: Thivillier, Patrick
(86) Numéro de dépôt international: PCT/FR2008/050521
(87) Numéro de publication internationale: WO 2008/139072

(56) Documents cités:
- EP-A- 0 928 740
- FR-A- 730 775
- US-A- 2 409 335
- US-A- 2 926 873

## Description

L'invention concerne un dispositif de freinage de sécurité.

D'une manière générale, ce dispositif est destiné à être monté entre un réservoir de fluide hydraulique et des organes actionneurs aptes à agir sur des éléments de freinage.

L'invention trouve une application particulièrement avantageuse pour équiper le circuit de freinage des avions d'un poids inférieur à 5,7 tonnes, selon les normes internationales en vigueur.

On rappelle que, d'une manière connue, dans ce type d'avion, les freins sont montés sur les roues du train principal et sont actionnés hydrauliquement au moyen d'une pédale droite et d'une pédale gauche. Chacune des pédales agit sur un maître-cylindre relié aux éléments de freinage de chacune des roues. Les freins sont actionnés séparément par les pédales droite et gauche, ce qui permet en outre, en fonction de l'effort exercé sur l'une des pédales, de solliciter à la pression, un seul maître-cylindre par exemple, afin de bloquer ou ralentir l'une des roues permettant, de manière concomitante, de faire tourner l'avion au fur et à mesure de son avancement, avec un rayon de braquage plus ou moins important dépendant de la pression exercée.

Cependant, avec ce système de freinage, il est très difficile d'assurer un freinage en ligne droite. En effet, un freinage en ligne droite exige une force identique sur les deux roues, se traduisant par un effort de pression identique sur chacune des deux pédales. En réalité, il est très difficile, voire quasiment impossible, d'exercer, sur chacune des pédales, un effort de pression identique. Lorsque l'avion circule sur la piste, à une très faible vitesse, les conséquences de cette inégalité de pression sur chacune des pédales, peuvent être acceptables. Par contre, ce n'est pas le cas lorsque l'avion atteint une vitesse élevée, à l'atterrissage ou au décollage. Si, pour des raisons quelconques (manque de puissance au niveau du moteur, vitesse trop élevée, ...), le pilote est obligé de faire un freinage dit d'urgence, les risques sont très importants de bloquer une roue par rapport à l'autre entraînant immédiatement le pivotement et la non maîtrise de la trajectoire de l'avion, avec des risques importants de renversement.

Des études ont démontré qu'avec ce type d'avion inférieur à 5,7 tonnes, un quart des accidents se produisent à l'atterrissage ou au décollage, suite à un freinage d'urgence.

L'invention s'est fixée pour but de remédier à ces inconvénients d'une manière simple, sûre, efficace et rationnelle.

Le problème que se propose de résoudre l'invention est d'équiper le circuit de freinage de ce type d'avion (inférieur à 5,7 tonnes) d'un dispositif entièrement mécanique permettant au pilote d'effectuer un freinage d'urgence en répartissant automatiquement la pression hydraulique, d'une manière égale, dans chacun des éléments de freinage de chacune des roues de l'avion.

Pour résoudre un tel problème, il a été conçu et mis au point un dispositif de freinage de sécurité qui comprend un maître cylindre relié hydrauliquement au réservoir et aux éléments de freinage et un mécanisme d'armement et de verrouillage en position de non compression dudit maître cylindre, ledit mécanisme étant assujetti à un organe de commande apte à assurer son déverrouillage pour solliciter, d'une manière concomitante, le maître cylindre afin que ce dernier exerce une pression hydraulique prédéterminée pour agir sur les éléments de freinage.

Pour résoudre le problème posé de réaliser un dispositif entièrement mécanique, le mécanisme d'armement comprend :
- un levier articulé relié par un système de bielles à l'une des extrémités du corps du maître cylindre ;
- un organe basculeur accouplé, d'une manière articulée, à la tige du piston du maître cylindre, ledit organe basculeur étant assujetti à un organe élastique de rappel apte à stocker une énergie ;
- un crochet pivotant relié à l'organe de commande et apte à coopérer avec une partie de l'organe basculeur pour son maintien en position de verrouillage correspondant à la non compression du maître cylindre, ledit crochet étant rappelé en position de verrouillage par un ressort.

Pour résoudre le problème posé d'assurer une commande automatique du dispositif de freinage de sécurité, l'organe de commande est accouplé à une partie de l'organe basculeur pour provoquer, sous un effet de sollicitation dudit organe, le pivotement dudit organe basculeur et son déverrouillage pour solliciter la tige de piston du maître cylindre afin d'exercer la pression hydraulique.

Compte tenu des caractéristiques à la base du dispositif selon l'invention, dans une position du levier, correspondant à une position dite de repos, l'organe de rappel élastique n'est pas comprimé, l'organe basculeur est verrouillé et le maître cylindre non sollicité à la pression, tandis que dans une autre position du levier, correspondant à une position dite d'armement, l'organe élastique est comprimé, l'organe basculeur est verrouillé et le maître cylindre non sollicité à la pression.

Dans une forme de réalisation, l'organe de rappel élastique est un vérin à gaz. L'une des extrémités du vérin à gaz est articulée sur un axe de l'organe basculeur, l'autre extrémité dudit vérin étant accouplé au système de bielles.

Pour résoudre le problème posé d'assurer la commande en pivotement de l'organe basculeur, le système de bielles comprend au moins une bielle principale coudée articulée à une partie du levier de manoeuvre et au moins une biellette rectiligne articulée à l'une des extrémités de la bielle et à l'extrémité du corps du maître cylindre.

Selon une autre caractéristique, l'organe de commande est un câble actionnable manuellement ou automatiquement sous une action.

Pour résoudre le problème posé de permettre d'accéder et de commander, à volonté, le dispositif selon l'invention, ce dernier est intégré dans un carter étanche présentant des agencements pour l'actionnement du levier d'armement et de l'organe de commande.

Comme indiqué, le dispositif trouve une application particulièrement avantageuse dans le cas d'un système de freinage d'un avion de poids inférieur à 5,7 tonnes, le maître cylindre étant relié hydrauliquement au réservoir de fluide hydraulique et, par l'intermédiaire d'un T, à chacun des maîtres cylindres que présente d'origine le système de freinage de l'avion correspondant à chacune des roues et actionnés séparément par des pédales

L'invention est exposée ci-après plus en détail à l'aide des figures des dessins annexés dans lesquels :
- la figure 1 est une vue en perspective d'une forme de réalisation du dispositif de freinage de sécurité selon l'invention ;
- la figure 2 est une vue semblable à la figure 1 considérée selon un autre angle de perspective ;
- la figure 3 est une vue en plan de dessus du dispositif ;
- la figure 4 montre l'intégration du dispositif dans un carter de protection ;
- les figures 5, 6 et 7 sont des vues en coupe partielle montrant les principales phases du fonctionnement, à savoir :
   ✔ figure 5 : position repos,
   ✔ figure 6 : position d'armement,
   ✔ figure 7 : position freinage automatique.
- la figure 8 est une vue à caractère schématique montrant la mise en place du dispositif dans le cas d'un système de freinage pour avion de poids inférieur à 5,7 tonnes.

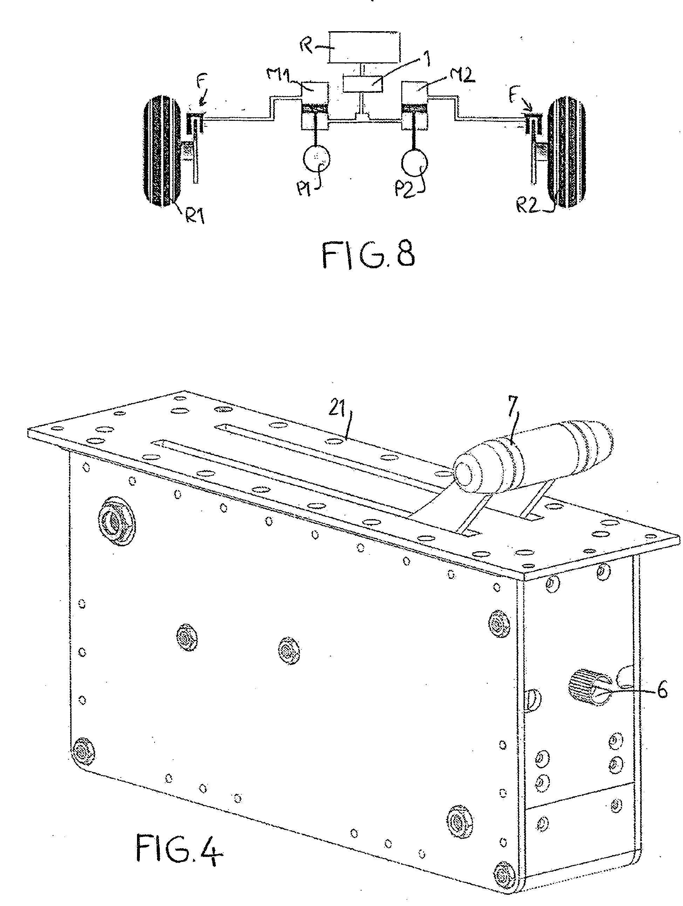

Le dispositif de freinage de sécurité selon l'invention est destiné à être monté entre un réservoir de fluide hydraulique (R) et des organes actionneurs (A) aptes à agir sur des éléments de freinage (F). Tout particulièrement, le dispositif de freinage de sécurité trouve une application particulièrement avantageuse dans le cas d'un circuit de freinage pour avion de poids inférieur à 5,7 tonnes. Dans ce cas, le dispositif est monté entre le réservoir de fluide hydraulique (R) et les maîtres cylindres (M1) et (M2) assujettis chacun à une pédale (P) pour la commande des organes de freinage (F) (figure 8).

Le dispositif de sécurité de freinage comprend un mécanisme d'armement et de verrouillage en position de non compression d'un maître cylindre (1) relié hydrauliquement au réservoir (R) par un raccord (2) et à chacun des organes de freinage par des raccords (3) et (4). Le maître cylindre est de tout type connu et approprié, et présente notamment un piston mobile (5) dont la tige (5a) déborde de l'une des extrémités du corps du maître cylindre (1).

Selon une caractéristique à la base de l'invention et comme il sera indiqué plus en détails dans la suite de la description, le mécanisme d'armement et de verrouillage est assujetti à un organe de commande (6) qui est apte à assurer le déverrouillage du mécanisme pour solliciter, de manière concomitante, le maître cylindre (1) afin que ce dernier exerce une pression hydraulique prédéterminée pour agir, avec la même force, sur chacun des éléments de freinage (F).

Dans la forme de réalisation illustrée, ce mécanisme d'armement comprend un levier (7) articulé sur un axe fixe (8). Ce levier (7) est relié par un système de bielles (9) à l'une des extrémités du corps du maître cylindre (1) considérée à l'opposé de la tige débordante (5a) du piston (5). Ce système de bielles (9) comprend au moins une bielle principale coudée (9a) articulée à une partie du levier de manoeuvre (7). A son extrémité, la bielle coudée (9a) est articulée à une biellette rectiligne (9b) articulée sur une partie fixe (10) du corps du maître cylindre (1).

Le système de bielles (9) est relié, par un organe élastique de rappel (11) apte à stocker une énergie, à un organe basculeur (12). Par exemple, cet organe de rappel (11) est constitué par un vérin à gaz accouplé, d'une manière articulée, sur un axe (13) sur lequel sont également articulées les extrémités des bielles (9a) et (9b). A son autre extrémité, l'organe (11) est accouplé à un axe (14) que présente une partie de l'organe basculeur (12) monté avec capacité de pivotement par rapport à un axe fixe (15). Une autre partie de l'organe actionneur (12) est articulé par un axe (16) en bout de la tige (5a) du piston (5) du maître cylindre (1).

L'organe basculeur (12) est monté en combinaison avec un crochet pivotant (17) articulé sur un axe fixe (18). Le crochet pivotant (17) est relié à l'organe de commande (6) et coopère avec une partie de l'organe basculeur sous forme, par exemple, d'un galet (19), ce crochet étant rappelé en position de verrouillage par un ressort (20). Le crochet (17) a donc pour fonction de maintenir en position de verrouillage l'organe basculeur (12) correspondant à la non compression du maître cylindre (1).

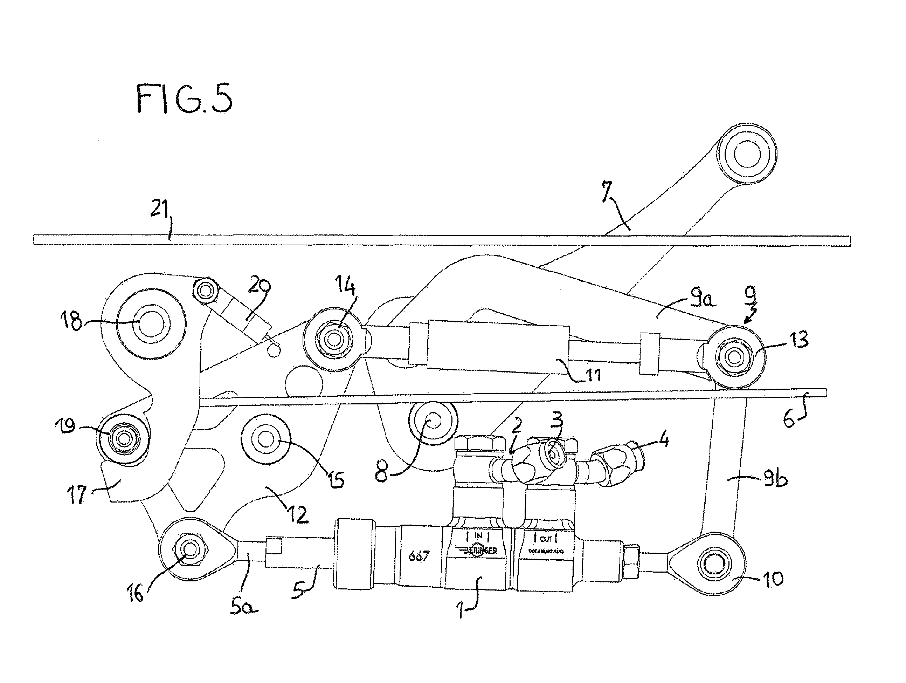

Dans une position du levier (7) correspondant à une position dite de repos (figure 5), le vérin à gaz (11) n'est pas comprimé, l'organe basculeur (12) étant verrouillé par le crochet (17) qui coopère avec le galet (19). Comme indiqué, dans cette position, la tige (5a) du piston (5) du maître cylindre (1), n'est pas sollicitée, de sorte qu'aucune pression n'est exercée sur le maître cylindre (1).

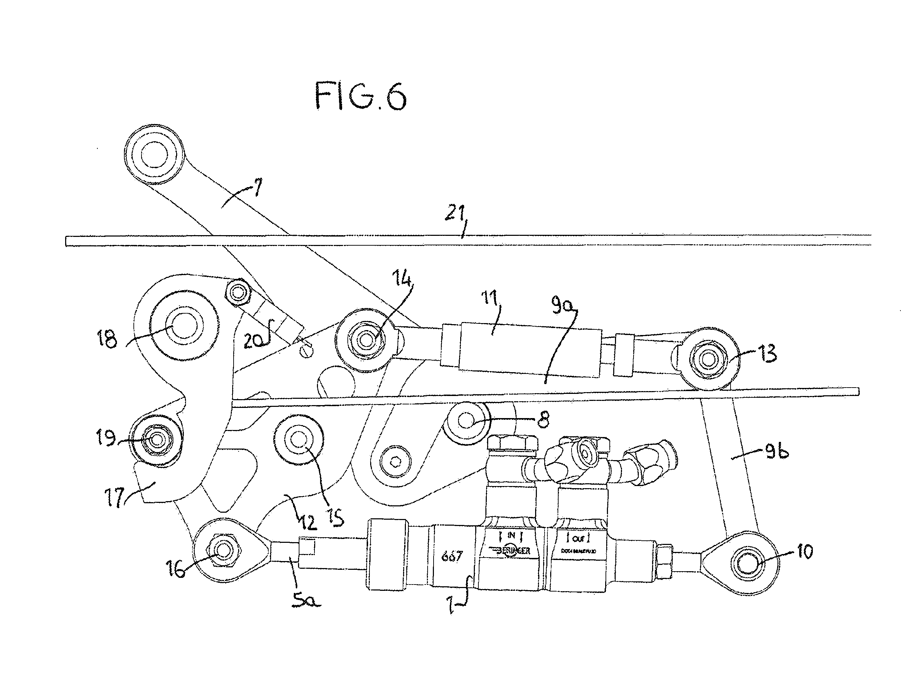

Dans une autre position basculée du levier (7), opposée à la précédente (figure 6), le dispositif est en position dite d'armement. Dans cette position, le vérin à gaz (11) est comprimé, l'organe basculeur (12) étant verrouillé de la même façon que dans la position dite de repos illustrée figure 5. Par conséquent, dans cette position dite d'armement, le maître cylindre (1) n'est pas sollicité à la pression.

Pour réaliser un freinage automatique destiné à envoyer une pression de freinage identique sur chacun des organes de freinage, il suffit d'actionner l'organe de commande (6), afin de faire basculer, de manière correspondante, le crochet (17) pour libérer l'organe basculeur (12). L'organe basculeur (12) étant déverrouillé, le vérin à gaz (11) peut se détendre provoquant, de manière concomitante, le basculement dudit organe (12) par rapport à l'axe (15) et l'enfoncement de la tige (5a) du piston (5) du maître cylindre (1), afin de soumettre ce dernier à une pression hydraulique d'intensité déterminée. Cette pression hydraulique est équitablement repartie et transmise par les deux orifices (3) et (4) aux organes de freinage.

A noter que l'action sur l'organe de commande (6) peut être manuelle ou automatique, cet organe (6) pouvant être déclenché par action externe quelconque. Cet organe de commande (6) peut être constitué par un câble accouplé au crochet (17).

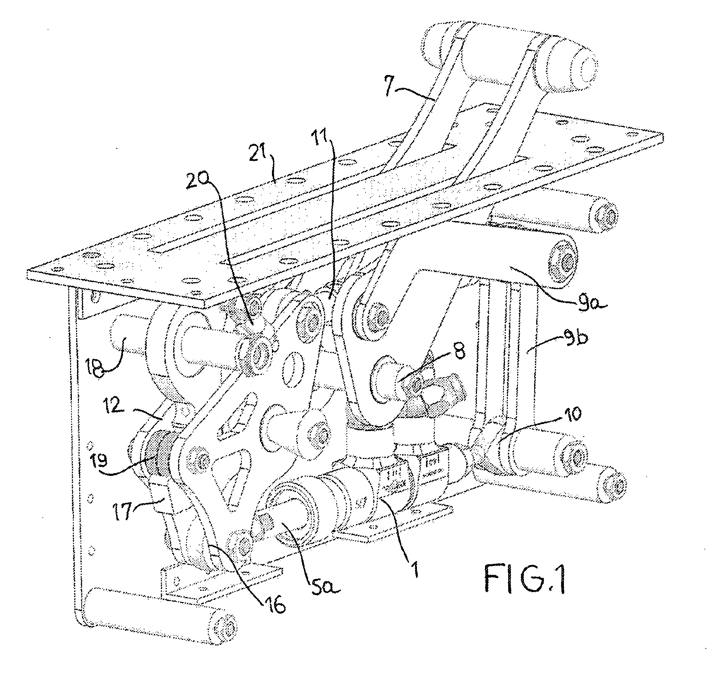

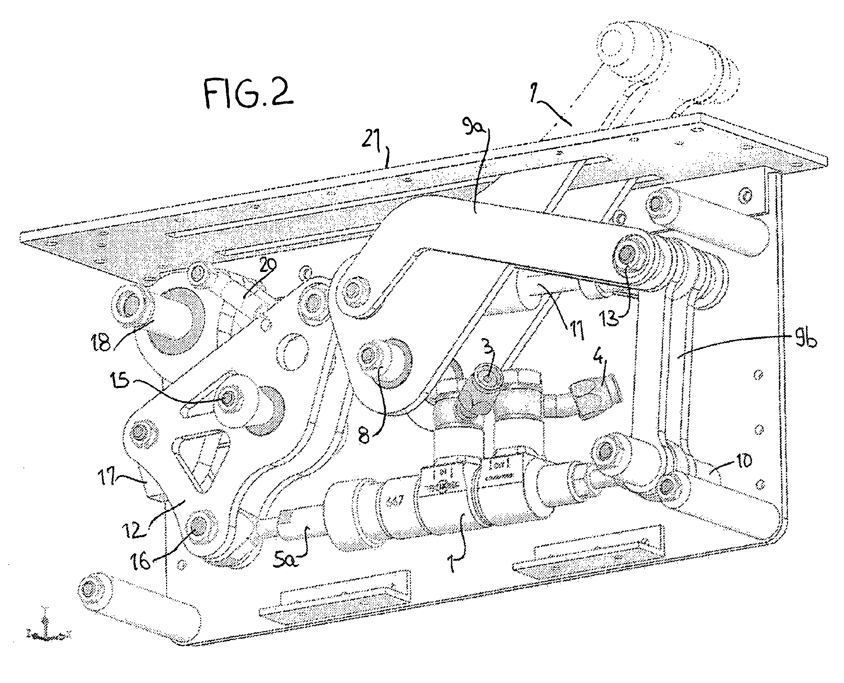

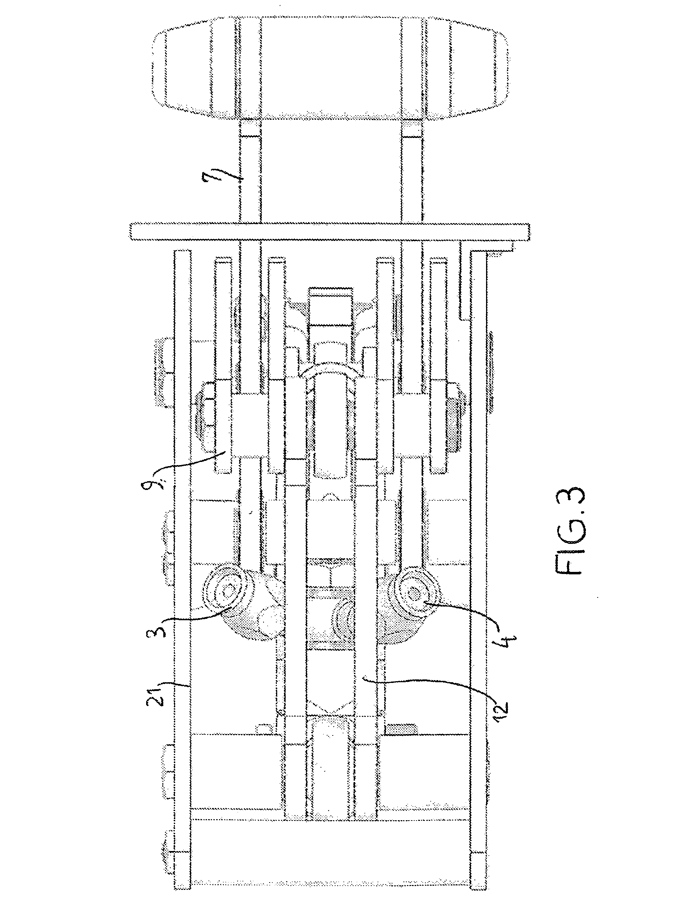

Comme les montrent les figures des dessins, l'ensemble du dispositif de sécurité tel que défini est intégré, par exemple, dans un carter étanche (21) présentant tout type d'agencement pour l'actionnement du levier de manoeuvre et d'armement (7), et l'organe de commande (6). Dans ce cas, les différents axes précités (10), (13), (14), (8), (16), (18) sont montés transversalement entre les côtés latéraux du carter (21). On renvoie notamment aux figures 1, 2, 3 et 4, qui montrent un exemple de réalisation et de montage du dispositif de freinage de sécurité selon l'invention.

Comme indiqué, l'invention trouve une application particulièrement avantageuse dans le cas d'un système de freinage d'un avion de poids inférieur à 5,7 tonnes. Dans ce cas, et comme le montre notamment la figure 8, le maître cylindre (1) est relié par l'orifice (2) au réservoir hydraulique (R) et, par les orifices (3) et (4) par l'intermédiaire d'un T, à chacun des maîtres cylindres (M1) et (M2) correspondant à chacune des roues (R1) et (R2) de l'avion. Les maîtres cylindres (M1) et (M2) sont actionnés chacun par une pédale (P1) et (P2).

Lorsque le dispositif de sécurité de freinage selon l'invention n'est pas actionné (figure 5), le freinage de l'avion s'effectue d'une manière classique au moyen des pédales (P1) et (P2). Par contre si, pour des raisons diverses, le pilote est obligé de pratiquer un freinage d'urgence, le dispositif étant armé (figure 6), il lui suffit d'actionner, par tout moyen, l'organe de commande (6) pour déverrouiller l'organe basculeur (12) et solliciter à la pression le maître cylindre (1) pour envoyer, dans chacun des maîtres cylindres (M1) et (M2) assujettis aux organes de freinage, une pression hydraulique identique permettant par conséquent d'assurer un freinage en ligne droite.

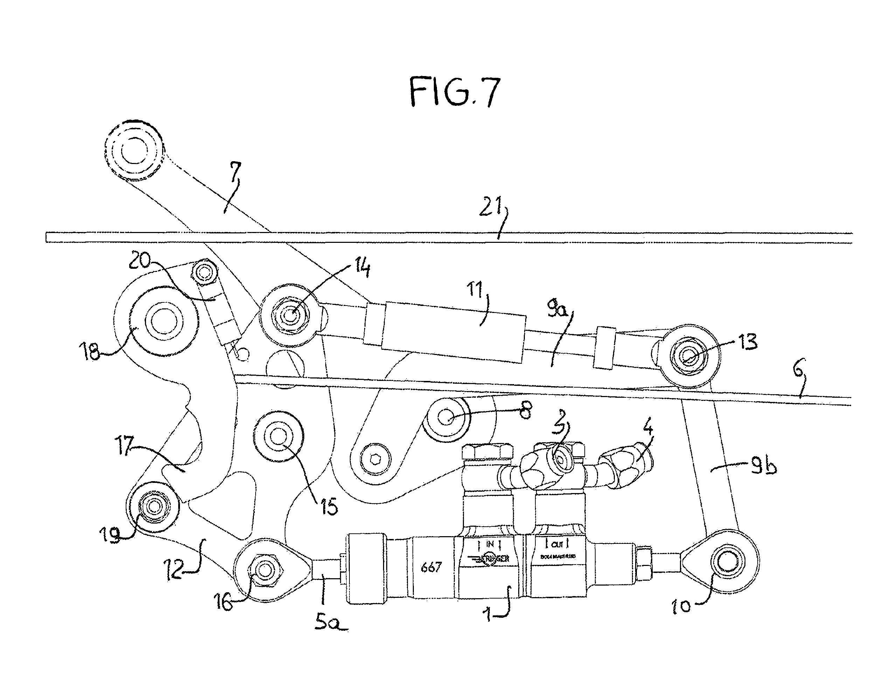

A noter que, dans la position illustrée figure 7 correspondant au déclenchement du dispositif, ce dernier constitue avantageusement un frein dit de parking.

Les avantages ressortent bien de la description, en particulier on souligne et on rappelle:
- la conception entièrement mécanique du dispositif de freinage de sécurité ;
- la facilité d'adaptation du dispositif de freinage à un circuit classique d'un avion de poids inférieur à 5,7 tonnes ;
- l'efficacité du freinage obtenu permettant d'assurer l'arrêt de l'avion en ligne droite, évitant par conséquent tout effet de pivotement et de basculement de ce dernier ;
- la fiabilité du fonctionnement ;
- l'intégration de ce dernier dans un carter indépendant ;
- la possibilité de remplacer le maître cylindre en fonction de la pression hydraulique souhaitée.

Comme indiqué, le dispositif peut trouver, dans le domaine du freinage, une application autre qu'un circuit de frein pour avion de poids inférieur à 5,7 tonnes.

## Revendications

1. Dispositif de freinage de sécurité apte à être monté entre un réservoir de fluide hydraulique et des organes actionneurs aptes à agir sur des éléments de freinage,
**caractérisé en ce qu'**il comprend un maître cylindre (1) relié hydrauliquement au réservoir et aux éléments de freinage et un mécanisme d'armement et de verrouillage en position de non compression dudit maître cylindre (1),
ledit mécanisme étant assujetti à un organe de commande (6) apte à assurer son déverrouillage pour solliciter, d'une manière concomitante, le maître cylindre (1) afin que ce dernier exerce une pression hydraulique prédéterminée pour agir sur les éléments de freinage.

2. Dispositif de freinage selon la revendication 1, **caractérisé en ce que** le mécanisme d'armement comprend :
- un levier articulé (7) relié par un système de bielles (9) à l'une des extrémités (10) du corps du maître cylindre (1) ;
- un organe basculeur (12) accouplé, d'une manière articulée, à la tige (5a) du piston (5) du maître cylindre (1), ledit organe basculeur (12) étant assujetti à un organe élastique de rappel (11) apte à stocker une énergie ;
- un crochet pivotant (17) relié à l'organe de commande (6) et apte à coopérer avec une partie de l'organe basculeur pour son maintien en position de verrouillage correspondant à la non compression du maître cylindre (1), ledit crochet (12) étant rappelé en position de verrouillage par un ressort (20).

3. Dispositif de freinage selon les revendications 1 et 2, **caractérisé en ce que** l'organe de commande (6) est accouplé à une partie de l'organe basculeur (12) pour provoquer, sous un effet de sollicitation dudit organe (6), le pivotement dudit organe basculeur (12) et son déverrouillage pour solliciter la tige de piston du maître cylindre (1) afin d'exercer la pression hydraulique.

4. Dispositif de freinage selon la revendication 1, **caractérisé en ce que**, dans une position du levier (7), correspondant à une position dite de repos, l'organe de rappel élastique (11) n'est pas comprimé, l'organe basculeur (12) est verrouillé et le maître cylindre (1) non sollicité à la pression, tandis que dans une autre position du levier (7), correspondant à une position dite d'armement, l'organe de rappel élastique (11) est comprimé, l'organe basculeur est verrouillé et le maître cylindre non sollicité à la pression.

5. Dispositif de freinage selon la revendication 1, **caractérisé en ce que** l'organe de rappel élastique est un vérin à gaz.

6. Dispositif de freinage selon les revendications 1 à 5, **caractérisé en ce que** l'une des extrémités du vérin à gaz (11) est articulée sur un axe (14) de l'organe basculeur (12), l'autre extrémité dudit vérin (11) étant accouplé au système de bielles (9).

7. Dispositif de freinage selon les revendications 2 et 6, **caractérisé en ce que** le système de bielles comprend au moins une bielle principale coudée (9a) articulée à une partie du levier de manoeuvre (7) et au moins une biellette rectiligne (9b) articulée à l'une des extrémités de la bielle coudée (9a) et à l'extrémité du corps du maître cylindre (1).

8. Dispositif de freinage selon la revendication 1, **caractérisé en ce que** l'organe de commande est un câble actionnable manuellement ou automatiquement sous une action.

9. Dispositif de freinage selon l'une quelconque des revendications 1 à 8, **caractérisé en ce qu'**il est intégré dans un carter étanche présentant des agencements pour l'actionnement du levier d'armement (7) et de l'organe de commande (6).

10. Utilisation du dispositif selon l'une quelconque des revendications 1 à 9 à un système de freinage d'un avion de poids inférieur à 5,7 tonnes, le maître cylindre (1) étant relié hydrauliquement au réservoir de fluide hydraulique et à chacun des maîtres cylindres que présente d'origine le système de freinage de l'avion correspondant à chacune des roues et actionnés séparément par des pédales.

## Claims

1. Safety braking device capable of being fitted between a hydraulic fluid tank and actuators capable of acting on braking components,
**characterised in that** it comprises a master cylinder (1) hydraulically linked to the tank and the braking components, and a mechanism for arming and locking said master cylinder (1) in its non-compressed position, said mechanism being controlled by a control unit (6) capable of ensuring unlocking of the mechanism in order to concomitantly actuate the master cylinder (1) so that the latter exerts a predetermined hydraulic pressure in order to actuate the braking components.

2. Device as claimed in claim 1, **characterised in that** the arming mechanism comprises:
- An articulated lever (7) linked by a system of connecting rods (9) to one of the ends (10) of the body of master cylinder (1);
- An over-centre device (12) articulatedly coupled to rod (5a) of piston (5) of master cylinder (1), said over-centre device (12) being controlled by an elastic return device (11) capable of storing energy;
- A swivel hook (17) connected to control unit (6) and capable of cooperating with a part of the over-centre device in order to secure it in a locked position that corresponds to non-compression of master cylinder (1), said hook (17) being returned to its locked position by spring (20).

3. Braking device as claimed in claims 1 and 2, **characterised in that** control unit (6) is coupled to a part of over-centre device (12) in order to cause, due to the effect of said device (6) being actuated, swivelling of said over-centre device (12) and its unlocking in order to actuate the piston rod of master cylinder (1) in order to exert hydraulic pressure.

4. Braking device as claimed in claim 1, **characterised in that**, in one position of lever (7) which corresponds to an idle position, elastic return device (11) is not compressed, over-centre device (12) is locked and master cylinder (1) is not compressed whereas, in another position of lever (7) corresponding to an armed position, elastic return device (11) is compressed, the over-centre device is locked and the master cylinder is not compressed.

5. Braking device as claimed in claim 1, **characterised in that** the elastic return device is a gas spring.

6. Braking device as claimed in claims 1 to 5, **characterised in that** one of the ends of gas spring (11) is articulated on a shaft (14) of over-centre device (12) and the other end of said spring (11) is coupled to the system of connecting rods (9).

7. Braking device as claimed in claims 2 and 6, **characterised in that** the system of connecting rods comprises at least one main bent connecting rod (9a) articulated on a part of operating lever (7) and at least one straight small connecting rod (9b) articulated on one of the ends of bent connecting rod (9a) and to the end of the body of master cylinder (1).

8. Braking device as claimed in claim 1, **characterised in that** the control unit is a cable that can be manually or automatically actuated by an action.

9. Braking device as claimed in any of claims 1 to 8, **characterised in that** it is enclosed in a housing which has features in order to actuate arming lever (7) and control unit (6).

10. Use of the device as claimed in any of claims 1 to 9 in a braking system of an aircraft weighing less than 5.7 t, master cylinder (1) being hydraulically linked to the hydraulic fluid tank and to each of the master cylinders which the braking system of the aircraft originally has, corresponding to each of the wheels and separately actuated by pedals.

## Patentansprüche

1. Sicherheitsbremsvorrichtung, die für den Einbau zwischen einem Hydraulikflüssigkeitsbehälter und auf Bremselemente einwirkfähige Betätigungsorgane geeignet ist, **dadurch gekennzeichnet, dass** sie einen hydraulisch mit dem Gehälter und den Bremselementen verbundenen Hauptzylinder (1) und einen Mechanismus für die Spannung und Verriegelung in druckloser Position des Hauptzylinders (1) umfasst, wobei der besagte Mechanismus von einem Schaltorgan (6) abhängt, das geeignet ist, ihn zu entriegeln, um gleichzeitig den Hauptzylinder (1) anzusprechen, damit dieser einen vorgegebenen hydraulischen Druck ausübt, um auf die Bremselemente einzuwirken.

2. Bremsvorrichtung nach Anspruch 1, **dadurch gekennzeichnet, dass** der Spannmechanismus folgende Bauteile umfasst:
- ein angelenkter Hebel (7), der durch ein Pleuelsystem (9) mit einem der Enden (10) des Gehäuses des Hauptzylinders (1) verbunden ist;
- ein Kipporgan (12), das gelenkig an die Stange (5a) des Kolbens (5) des Hauptzylinders (1) angekuppelt ist, wobei das Kipporgan (12) von einem zur Energiespeicherung befähigten elastischen Rückholorgan (11) abhängig ist;
- ein schwenkbarer Haken (17), der mit dem Schaltorgan (6) verbunden und geeignet ist, mit einem Teil des Kipporgans zusammenzuwirken, um es in der Verriegelungsposition zu halten, die der Drucklosigkeit des Hauptzylinders (1) entspricht, wobei der Haken (7) durch eine Feder (20) in die Verriegelungsposition zurückgeholt wird.

3. Bremsvorrichtung nach den Ansprüchen 1 und 2, **dadurch gekennzeichnet, dass** das Schaltorgan (6) mit einem Teil des Kipporgans (12) gekoppelt ist, um bei Beanspruchung des besagten Organs (6) die Schwenkbewegung des Kipporgans (12) und seine Entriegelung zu bewirken, damit die Kolbenstange des Hauptzylinders (1) den hydraulischen Druck ausübt.

4. Bremsvorrichtung nach Anspruch 1, **dadurch gekennzeichnet, dass** das elastische Rückholorgan (11) in einer Position des Hebels (7), die einer so genannten Ruheposition entspricht, nicht zusammengedrückt ist, wobei das Kipporgan (12) verriegelt und der Hauptzylinder (1) nicht auf Druck beansprucht ist, während das elastische Rückholorgan (11) in einer anderen Position des Hebels (7), die einer so genannten Spannposition entspricht, zusammengedrückt ist, wobei das Kipporgan verriegelt und der Hauptzylinder nicht auf Druck beansprucht ist.

5. Bremsvorrichtung nach Anspruch 1, **dadurch gekennzeichnet, dass** das elastische Rückholorgan ein Gaszylinder ist.

6. Bremsvorrichtung nach einem der Ansprüche 1 bis 5, **dadurch gekennzeichnet, dass** eines der Enden des Gaszylinders (11) an einer Achse (14) des Kipporgans (12) angelenkt ist, während das andere Ende des besagten Zylinders (11) an das Pleuelsystem (9) angekuppelt ist.

7. Bremsvorrichtung nach den Ansprüchen 2 und 6, **dadurch gekennzeichnet, dass** das Pleuelsystem mindestens ein gekröpftes Hauptpleuel (9a), das an einen Teil des Betätigungshebels (7) angelenkt ist, und mindestens ein gerades Pleuel (9b), das an ein Ende des gekröpften Pleuels (9a) und an das Ende des Gehäuses des Hauptzylinders (1) angelenkt ist, umfasst.

8. Bremsvorrichtung nach Anspruch 1, **dadurch gekennzeichnet, dass** das Schaltorgan ein von Hand oder automatisch in einer Aktion zu betätigender Seilzug ist.

9. Bremsvorrichtung nach einem der Ansprüche 1 bis 8, **dadurch gekennzeichnet, dass** sie in ein dichtes Gehäuse integriert ist, das Vorkehrungen für die Betätigung des Spannhebels (7) und des Schaltorgans (6) aufweist.

10. Verwendung der Vorrichtung nach einem der Ansprüche 1 bis 9 auf ein Bremssystem eines Flugzeugs mit einem Gewicht unter 5,7 Tonnen, wobei der Hauptzylinder (1) hydraulisch mit dem Hydraulikflüssigkeitsbehälter und mit jedem einzelnen - separat durch Pedale betätigten - Hauptzylinder des originären Flugzeug-Bremssystems für jedes einzelne Rad verbunden ist.
